# EUROPEAN PATENT SPECIFICATION

(11) **EP 3 147 114 B1**
(45) Date of publication and mention of the grant of the patent: **06.11.2019**
(21) Application number: 15186739.7
(22) Date of filing: 24.09.2015
(51) Int. Cl.: B29D 30/72, G01M 17/02, B29D 30/00

(54) **LASER TIRE PROCESSING DEVICE**
LASER-REIFENBEABEITUNGSVORRICHTUNG
DISPOSITIF DE TRAITEMENT DE PNEUS PAR USINAGE LASER

(43) Date of publication of application: 29.03.2017
(73) Proprietor: 4JET Technologies GmbH, 52477 Alsdorf (DE)
(72) Inventor: KRAUS, Armin, 52134 Herzogenrath (DE); KEULERS, Patrick, 52066 Aachen (DE); FEUSTER, Jens, 52078 Aachen (DE); LINDENAU, Frank, 52349 Düren (DE)
(74) Representative: Dilg, Haeusler, Schindelmann Patentanwaltsgesellschaft mbH

(56) References cited:
- EP-A1- 2 905 125
- WO-A1-2011/002595
- WO-A1-2015/047734
- DE-A1-102007 028 933
- DE-U1-202005 000 640
- US-A1- 2004 074 292
- US-A1- 2006 161 381

## Description

### FIELD OF INVENTION

The present invention relates to the field of laser treatment of a tire, in particular to providing a tire with a machine readable data matrix by laser treatment of the tire.

### BACKGROUND

DE 20 2005 002 355 U1 discloses a laser device for marking of vehicle tires with laser wherein tires of different types lie on a conveyor belt and are transported through the device without stop and sliding. On a pivoting arm a sheet of light sensor is mounted by which, under pivoting the arm, a relief structure of a sidewall of the tire is acquired as a height profile and compared to reference profiles. In this way, the type of the tire and the marking position is determined.

WO 2005/000714 A1 discloses a system for the marking of tires including a first (pre-centering and barcode reader) station, a second (vision) station, and a third (marking and verification) station connected by a tire transport mechanism. At the second station a vision camera system will read human visible printed indicia or characters which have been molded into the tire. A laser applicator or engraver is adjustably mounted at the third station by an adjustment mechanism which enables it to be moved in the X, Y and Z planes so that the laser beam can be properly positioned to the X and Y direction for engraving additional data on the tire. Adjustment in the Z direction will adjust for the focal length of the laser beam. A data matrix can be used for subsequent engraving on a sidewall of the tire. In a different system a tire passes through a lateral centering device. The laterally centered tire then moves past the centering device into a first read station. The first read station contains longitudinal centering logic and uses a camera and lasers for determining the O.D., I.D., height, and sidewall profile of the tire. As the tire enters the first read station and is moving the tire is measured using photo eyes and logic that calculates the O.D. The O.D. is then halved and this position on the tire is then the command stop position for centering the tire in the first read station. Once a stopped several pictures of the tire are taken by the camera. First the picture of the tire with no additional light, then two different pictures are taken with two different visible laser lines projected across the tire sidewall into different locations with these pictures the control system determines the sidewall profile as well as all other dimensional and position data on the tire the control system also confirms that the tire is centered both laterally and longitudinally on the conveyor in the first read station.

DE 10 2007 028933 A1 relates to a method of determining a position for providing a sign on a side wall of a vehicle air tire by means of a laser writing head, wherein the laser writing head is centered with regard to an axis of rotation of the tire and an angular position of the sign is calculationally determined by sensing/measuring the side wall according to the light sheet method.

WO 2015/047734 A1 discloses to identify the location and/or other identifiable characteristics of a localized tire surface anomaly. An ablation device is used on the tread of the tire to remove tire material at an azimuthal location associated with the localized tire surface anomaly to improve the uniformity of the tire.

US 2006/161381 A1 discloses a system for identifying and marking individual automotive tires including use of a light sheet sensor enabled image processing for identification of the tire type and the marking spot.

### SUMMARY

In view of the above-described situation, there exists a need for an improved technique that enables to improve a laser treatment of a tire. A laser treatment of a tire may include providing the tire with a machine readable data matrix by a laser treatment.

This need may be met by the subject matter according to the independent claims and the claimed invention is defined by the independent claims 1, 8, 9 and 10. Advantageous embodiments of the herein disclosed subject matter are described by the dependent claims.

In the following, exemplary embodiments of the herein disclosed subject matter are described, any number and any combination of which may be realized in an implementation of the herein disclosed subject matter.

According to an embodiment of a first aspect of the herein disclosed subject matter there is provided a method of determining a position of a part of a surface of a tire, the method comprising: determining a shape representation of the part of the surface, the shape representation being indicative of a shape of the part of the surface; identifying a real geometry element in the shape representation, the real geometry element corresponding to a reference geometry element if the tire is non-deformed and/or positioned in a reference position, the reference geometry element being symmetrical with respect to a reference axis, the reference axis corresponding to a tire axis if the tire is non-deformed and/or positioned in the reference position, and the tire axis being an axis of rotation of the tire; determining the position of the part of the surface based on a deviation of the real geometry element and the reference geometry element from each other.

According to an embodiment of a second aspect of the herein disclosed subject matter, there is provided a method of positioning with respect to each other a part of a surface of a tire and a laser beam path of a laser treatment device, the method comprising: determining the position of the part of the surface of the tire according to the first aspect or an embodiment thereof; depending on the determined position of the part of the surface, positioning the laser beam path and the part of the surface relative to each other; wherein positioning the laser beam path and the part of the surface relative to each other includes in particular at least one of: (i) adjusting a spatial position of the laser treatment device and the part of the surface relative to each other; (ii) adjusting an orientation of the laser beam path and the part of the surface relative to each other; (iii) adjusting a position of a focus of the laser beam path in a direction along the laser beam path.

According to an embodiment of a third aspect of the herein disclosed subject matter, there is provided a method of treating a treatment portion of a surface of a tire with a laser beam of a laser treatment device, the method comprising: performing the positioning of a part of the surface and the laser beam path according to the second aspect or an embodiment thereof; and subsequently treating the treatment portion with the laser beam, the laser beam being generated by the laser treatment device and propagating along the laser beam path.

According to an embodiment of a fourth aspect of the herein disclosed subject matter, there is provided a tire processing device comprising: a sensor device for determining a shape representation of a part of a surface of a tire; a data processor device configured for identifying a real geometry element in the shape representation, the real geometry element corresponding to a reference geometry element if the tire is non-deformed and/or positioned in a reference position; the reference geometry element being symmetrical with respect to a reference axis, the reference axis corresponding to a tire axis if the tire is non-deformed and/or positioned in the reference position, and the tire axis being an axis of rotation of the tire; the data processor device being configured for determining the position of the part of the surface based on a (positional) deviation of the real geometry element and the reference geometry element from each other.

According to an embodiment of a fifth aspect of the herein disclosed subject matter, there is provided a tire comprising: a pattern generated in a treatment portion of the tire by a laser beam propagating along a laser beam path, wherein in the following the pattern generated in the treatment portion is referred to as tire pattern; a surrounding surface surrounding the tire pattern, wherein during the generation of the tire pattern the laser beam path formed an angle different from 90 degrees with the surrounding surface; wherein compared to a desired pattern a distortion of the tire pattern due to the difference of the angle from 90 degrees was at least partially prevented by treating the treatment portion with the laser beam according to a transfer pattern definition, wherein a transfer pattern defined by the transfer pattern definition corresponds to a projection of the desired pattern in the treatment portion onto a virtual plane which is perpendicular to the laser beam path; and wherein in particular the desired pattern is a rectangular data matrix defining a first matrix axis and a second matrix axis, wherein each code module of the data matrix has equal dimensions along the first matrix axis and the second matrix axis.

According to an embodiment of a sixth aspect a computer program product is provided, the computer program product comprising a program element, the program element being configured for carrying out the method according to any one of first aspect, the second aspect, the third aspect or an embodiment thereof when the program element is executed on a data processor device.

According to an embodiment, the tire axis is a rotational symmetry axis of the general shape of tire (the axis about which the tire is intended to rotate during use). According to an embodiment, the real geometry element corresponds to the reference geometry element if the tire is non-deformed and positioned in a reference position, and the reference axis corresponds to the tire axis if the tire is non-deformed and positioned in the reference position.

According to an embodiment, the term "real geometry element" denotes a geometry element that is identified in the (measured) shape representation and hence denotes a measured geometry element. In contrast, according to a further embodiment the reference geometry element is an idealized geometry element which is obtained by assuming an ideal tire without deformation and which is exactly positioned in a reference position. According to an embodiment, the reference position is a predetermined position which is used as a reference for positioning the laser beam path and the part of the surface of the tire with respect to each other, e.g. as reference for the laser treatment device. According to an embodiment, the reference position is a predetermined position of the coordinate system of the laser processing device and may be fixed e.g. with regard to one or more actuators of the laser processing device. According to a further embodiment, the laser treatment device includes a program (or can be loaded with a program) that defines the position of the treatment portion with respect to the reference position (or with respect to some other reference of the laser treatment device), thereby allowing the laser treatment device to position the laser beam path and the tire (or the laser beam path and the part of the surface of the tire) with respect to each other such that a laser beam propagating along the laser beam path performs the desired treatment of the treatment portion (e.g. generating a tire pattern in the treatment portion).

According to a further embodiment, the part of the surface (of the tire) is defined by a lateral part of the tire. According to an embodiment, the lateral part of the tire includes at least part of a sidewall of the tire. According to a further embodiment, the part of the surface (of the tire) includes at least part of surface of a bead of the tire.

The shape of the surface (the contour) of the lateral part of a non-deformed tire is rotationally symmetric (except for markings) and hence the lateral part of the tire is a good basis for identifying a real geometry element and a reference geometry element according to embodiments of the herein disclosed subject matter. In particular the bead of the non-deformed tire is rotationally symmetric and usually free of markings. Accordingly, the bead of the tire (or a part thereof) provides a suitable basis for determining the position of the part of the surface of a tire according to embodiments of the herein disclosed subject matter. In particular, for unpressurized tires that may show a deformation compared to an ideal symmetrical shape of the tire the bead follows the deformation but is still identifyable and hence is well suited to determine the real geometry element, even if the tire is deformed. Hence, according to an embodiment at least part of the bead of the tire (e.g. a radially inner tire edge) defines the real geometry element.

The deformation may arise from the action of gravity if the tire is positioned on a support with only a part of it facing the support. Another possible reason for a deformation may be a gripping device or centering device which may be provided for gripping and/or centering of the tire. Anyway, irrespective of the reason of the deformation, according to an embodiment methods and devices according to the herein disclosed subject matter are configured for taking into account a deformation of the tire which is represented by the shape representation of the part of the surface. On the other hand it is noted that the aspects and embodiments of the herein disclosed subject matter of course also work for non-deformed tires and allow determination of the position of the part of the surface of the tire. Even if the part of the surface does not reflect the entire deformation, the part of the surface is still suitable for providing an accurate laser processing of the tire if the part of the surface includes the treatment portion or is at least close to the treatment portion. Otherwise a shape representation of the treatment portion may be determined and used for determining the position of the treatment portion. According to an embodiment, the position of the treatment portion is determined from the shape representation of the treatment portion analogous to the determination of the position of the part of the tire from the shape representation of the part of the tire.

According to an embodiment, by determining the position of the part of the surface of the tire also the position of the tire as such (of the entire tire) is implicitly determined. The determined position of the tire can be in particular accurate for non-deformed tires. However, the thus determined position of the tire may be also accurate even for deformed tires, in particular if the part of the surface of the tire includes opposing portions of the tire thus allowing to accurately determine the position of the tire axis. On the other hand, determining the position of the tire implicitly determines the accurate position of the part of the surface of the tire, at least if the shape of the tire is known (as is e.g. the case for non-deformed tires). Further, it should be understood that the positioning the part of the surface and the laser beam path with respect to each other implies positioning of the treatment portion and the laser beam path with each other. Likewise positioning of the part of the surface and the laser beam path with respect to each other implies positioning of the (entire) tire and the laser beam path with respect to each other. Only the accuracy of the positioning (i.e. positioning within small or large tolerances) is influenced by the deformation of the tire (if present). Anyway, herein according to an embodiment any reference to the "part of the surface" may be considered as reference to the "tire" or, in another embodiment, as a reference to the "treatment portion". By using reasonable assumptions on the deformation or by using suitable measurements (e.g. a suitable extent of the shape representation), for determining the disclosure of the present application the terms "part of the surface", "tire" and "treatment portion" can be used interchangeably where applicable. According to an embodiment, the term "accurate" is short for "sufficiently accurate for the intended application" - it should be understood that the required accuracy may depend on the actual application (desired pattern, laser device used, available space and tolerances for positioning the desired pattern or the position of the treatment portion, etc.).

According to an embodiment, the shape representation is a height profile of the part of the surface, wherein the height profile is in particular determined with respect to a plane which is perpendicular to the tire axis. According to a further embodiment, the shape representation is a picture of the part of the surface. Nevertheless, any other suitable shape representation of the part of the surface may be used.

In accordance with embodiments of the herein disclosed subject matter, the position of the part of the surface of the tire is determined based on a deviation of the real geometry element and the reference geometry element from each other. For example, according to an embodiment the radiation is a difference of the real geometry element and the reference geometry element.

According to an embodiment, determining the position (of the part of the surface) based on the deviation includes filtering the deviation, in particular by using a Fourier transformation, in order to obtain a filtered deviation; and determining the position of the part of the surface based on the filtered deviation. For example, according to an embodiment, determining the position (of the part of the surface) includes transforming the deviation (from real space) into a Fourier space (frequency space), e.g. by Fourier Transformation (FT) or Fast Fourier Transformation (FFT), thereby providing a spectrum of the deviation in the Fourier space. In accordance with an embodiment, the deviation is considered as comprising at least one harmonic because, when considering the deviation along an entire circumference, the deviation at the start point and at the end point (corresponding to the same angular position) are identical. Therefore according to an embodiment the deviation as a function of the angular position (e.g. with respect to the tire) is transformed into the Fourier space (which spectrum may then be filtered). According to an embodiment, the deviation includes a fundamental component and higher harmonics. The fundamental component may originate from a non-zero distance of the tire axis and the device axis of the laser treatment device or a non-zero distance of the tire axis and a sensor axis of the sensor device with which the shape representation is determined. The higher harmonics may correspond to a deformation of the tire and/or noise of the measurement (noise in the determined shape representation and/or noise in the real geometry element).

According to an embodiment, in the Fourier space the spectrum of the deviation is filtered with a filter function, thereby providing a filtered spectrum in the Fourier space. According to an embodiment, the filter function is configured so as to eliminate at least part of the higher harmonics in the Fourier space (e.g. the harmonics above a predetermined frequency). According to an embodiment, the position of the part of the surface of the tire is determined after filtering the spectrum of the deviation in the Fourier space. For example, according to an embodiment the method comprises transforming back the filtered spectrum into the real space, resulting in a filtered deviation, from which the position of the part of the surface is then determined. Generally, according to an embodiment the filter function is configured such that the method provides a filtered deviation in the real space, wherein according to an embodiment the filtered deviation comprises reduced noise compared to the original deviation of the real geometry element and the reference geometry element.

According to an embodiment, the shape representation (e.g. the height profile) of the part of the surface of the tire is determined with a sheet of light sensor which uses a sheet of light for illuminating the surface under consideration, generating a line of light on the surface, and observing the resulting line of light transverse to the plane of the sheet of light (off axis) and calculating the distance from the light source and the tire from the observing angle (triangulation). Further, the shape representation may be obtained from a picture of the part of the surface, e.g. a grayscale picture. According to a further embodiment, a contact sensor (tactile sensor, a sensor which is configured to sense the shape of the part of the surface while staying in contact with the surface) is used for determining the shape representation.

Once the shape representation is available (has been determined), in accordance with an embodiment of the herein disclosed subject matter the real geometry element is identified in the shape representation, e.g. by any suitable type of feature recognition. Generally, feature recognition in the shape representation, e.g. in the height profile or in the picture of the part of the surface, is known in the art and is therefore not described in detail herein. Nevertheless it should be understood that real geometry elements of high contrast (e.g. edges etc.) facilitate identification of the real geometry element, depending on the nature of the shape representation. According to an embodiment, the real geometry element is identified by a specific relative contrast or an specific absolute contrast in the shape representation or by specific relative values or specific absolute values (e.g. height values in case of a height profile).

According to an embodiment, the method (in particular according to the first, second or third aspect) comprises coarse positioning of the tire before the determining of the shape representation. For coarse positioning of the tire any positioning technique known in the art may be used (e.g. a light barrier, a light array, a mechanical centering device (or a mechanical positioning devices), etc).

According to an embodiment, the position of the part of the surface of the tire includes a spatial position of the part of the surface (e.g. a spatial position of the tire axis and the position of part of the surface in a direction parallel to the tire axis) and/or an angular position of the part of the surface (with respect to the tire axis). According to an embodiment, the angular position of the tire is the angular position of the tire with respect to a rotation of the tire about the tire axis. It is noted that generally herein a the term "with respect to the tire axis" is to be interpreted in a sense that the tire axis forms some reference for the quantity described (e.g. the angular position). Nevertheless according to embodiments the tire axis need not be identified or determined for determining the quantity described but is rather provided for easier understanding of the context of the quantity given. For example, with regard to the angular position mentioned, the reference "with respect to the tire axis" clarifies that considered is the angular position of the tire which may be adjusted e.g. by rotating the tire about the tire axis. However, determining this angular position does require to determine the tire axis but rather the determination of the angular position may be performed only based on the position of the part of the surface and a predetermined pattern described below.

According to an embodiment, the method (in particular of the first, second or third aspect) comprises identifying a predetermined pattern on the tire; wherein determining the position of the part of the surface includes determining an angular position of the part of the surface with respect to the tire axis based on the angular position of the predetermined pattern. According to a further embodiment, determining the angular position of the tire includes determining the angular position of the tire with a tolerance of +-5 degrees, in particular +- 1 degrees, or less.

According to an embodiment, the method (in particular of the second or third aspect) further comprises: determining a shape representation of a treatment portion of the surface of the tire, wherein the treatment portion is to be treated with a laser beam generated by the laser treatment device and propagating along the laser beam path; and said positioning of the laser beam path and the part of the surface relative to each other is performed also depending on the shape representation of the treatment portion.

According to an embodiment, for determining the shape representation a sensor device (e.g. a sheet of light sensor device or a picture sensor device) is used, wherein preferably during determining of the shape representation (of the part of the surface and/or of the treatment portion) the sensor device faces the part of the surface (and in a respective embodiment the treatment portion) under the same angle which the laser beam path forms with the treatment portion during treating the treatment portion with the laser beam.

For example, the sensor device may be moveable into the laser beam path for determining the shape representation and may be moveable out of the laser beam path for laser treatment of the treatment portion.

According to an embodiment, the part of the surface of the tire includes the treatment portion. This has the advantage that only a single shape representation has to be determined wherein the shape representation is indicative of a shape of the part of the surface of the tire and the shape representation is also indicative of the shape of the treatment portion of the surface of the tire. Nevertheless, in another embodiment, the treatment portion is distinct from the part of the surface of the tire which allows for optimizing of the determining of the shape representation of both, the part of the surface of the tire and the treatment portion. It is noted that positioning with respect to each other the part of the surface of the tire and the laser beam path does not necessarily mean that the laser beam path is ending in the part of the surface. Rather, in accordance with an embodiment the laser beam propagating along the laser beam path is intended to treat the treatment portion, requiring that the laser beam path ends in the treatment portion. Nevertheless the treatment portion may be included in the part of the surface (e.g. may be a portion of the part of the surface or may correspond to the part of the surface).

According to an embodiment, the adjusting of the orientation of the laser beam path and the part of the surface of the tire relative to each other is performed such that the laser beam path forms an acute angle, i.e. an angle smaller than 90 degrees with the treatment portion and wherein in particular this acute angle is in a range between 30 degrees and 85 degrees or between 40 degrees and 80 degrees.

According to an embodiment, the laser treatment device is rotatable about a laser device axis. According to an embodiment, the laser treatment device is movable with respect to the laser device axis.

According to a further embodiment, coarse positioning of the tire includes aligning the laser device axis and the tire axis within predetermined tolerances. The predetermined tolerances may include (i) an alignment of the orientation of the laser device axis and the tire axis with a deviation from parallel alignment of plus/minus (±) 5 degrees or less (e.g. ± 2 degrees or ± 1 degree) and/or (ii) an alignment of the position of the laser device axis and the tire axis such that (e.g. in a middle plane of the tire) the distance between the laser device axis and the tire axis is less than 10 mm (e.g. less than 5 mm or less than 2 mm). The middle plane of the tire is perpendicular to the tire axis and extends through the center of gravity of the tire.

According to embodiments of the herein disclosed subject matter, the position of the tire in lateral direction (i.e. perpendicular to the tire axis) can be determined with a tolerance of smaller than ± 2 mm or smaller than ± 0.7 mm. Herein the term lateral direction refers to a radial direction of the tire, e.g. as described with regard to the drawings.

According to an embodiment, the method (in particular of the third aspect) further comprises: receiving a tire pattern definition, the tire pattern definition defining a desired pattern to be generated in the treatment portion by treating the treatment portion with the laser beam; generating a transfer pattern definition based on the tire pattern definition wherein the transfer pattern defined by the transfer pattern definition corresponds to a projection of the desired pattern in the treatment portion onto a virtual plane which is perpendicular to the laser beam path, wherein treating the treatment portion with the laser beam is performed according to transfer pattern definition.

According to a further embodiment, the desired pattern is a rectangular data matrix (digital code pattern, e.g. in the form of a QR code) defining a first matrix axis and a second matrix axis, wherein a code module of the data matrix has equal dimensions along the first matrix axis and the second matrix axis.

According to a further embodiment, the desired pattern is realized by a black/black contrast patterning. For example, according to an embodiment bright portions of the desired pattern are formed by an non-altered surface of the tire (having a black appearance) whereas dark portions of the desired pattern are formed by a patterned portion of the tire wherein a surface structure is generated in the surface of the tire leading to a reduced optical reflectivity and hence to a darker appearance (dark black appearance) of the dark portions compared to the bright portions. According to an embodiment, the desired pattern and in particular a rectangular data matrix or digital code pattern is formed in the treatment portion as described in the published European patent application EP 2 905 125 and European patent application No. 14 177 901.7. According to an embodiment, the structure width is between 20 µm (micrometers) and 1400 µm, preferably between 400 µm and 750 µm.

According to an embodiment, the tire processing device comprises a laser treatment device; and an actuator (e.g. at least one actuator) configured for positioning with respect to each other the part of the surface of the tire and a laser beam path of the laser treatment device depending on the determined position of the part of the surface, e.g. by positioning the entire tire with respect to the laser beam path or so as to (i.e. to thereby) position the entire tire with respect to the laser beam path, just to name some examples. In other words, according to an embodiment the laser beam path is fine positioned based on the shape representation of the part of the surface of the tire and/or the shape representation of the treatment portion of the surface of the tire.

According to an embodiment, the (fine) positioning of the part of the surface and the laser beam path with respect to each other includes one or more of: (i) moving the laser beam path with respect to the part of the surface, (ii) moving the part of the surface with respect to the laser beam path. According to an embodiment, moving the laser beam path may include at least one of (iii) adjusting a laser beam guidance (such as a mirror system, an optical system, a galvanometer scanner, etc.), (iv) moving the laser treatment device, (v) adjusting a focus position of the laser beam path. In this regard it is noted that the laser beam path is considered as having a specific position of its focus point (this specific position being referred to as focus position) and hence (v) may be understood as a movement of the laser beam path in a direction of the laser beam path (e.g. back or forth in the direction of the laser beam path). According to a further embodiment the positioning of the part of the surface (e.g. the positioning of the tire) and the laser beam path with respect to each other includes shifting a beam focus of the laser beam path along the laser beam path. According to an embodiment, the laser beam focus is positioned with a tolerance which is smaller than 2 times the Rayleigh length of the laser beam or, in another embodiment smaller than 1 times the Rayleigh length of the laser beam.

According to an embodiment, the data processor device is configured for operating the laser treatment device after positioning the part of the surface and the laser beam path with respect to each other, wherein said operating of the laser treatment device includes operating the laser treatment device to generate a laser beam, the laser beam propagating along the laser beam path for treatment of a treatment portion of the surface of the tire.

According to an embodiment, the laser beam path is a mean path. For example, the mean path may correspond to an average of laser beam paths over a scan process in which the laser beam is moved over the treatment portion to treat the treatment portion with the laser beam (e.g. to generate the desired pattern in the treatment portion). According to another embodiment, the laser beam path is an individual path which corresponds to the path of the laser beam at a certain point in time, e.g. at the beginning of the treatment of the treatment portion with the laser beam. For example, the individual path may be the laser beam path as adjusted before the laser device is activated to emit the laser beam. In other words, according to an embodiment the individual path is the initial laser beam path with which the treatment of the treatment portion starts.

According to a further embodiment, the positioning of the laser beam path and the tire with respect to each other as described herein occurs, during treating of the treatment portion with the laser beam, continuously or intermittently, or only once. For example, in the continuous case, during the entire treatment of the treatment portion any positioning or repositioning of the laser beam path of the actual laser beam with respect to the tire is performed according to embodiments of the herein disclosed subject matter. It is noted that of course the determining of the position of the tire (and, if any, the determining of the shape representation of the treatment portion) and hence the use of the sensor device usually takes place only once, before the treatment of the treatment portion starts. To this end any shape representation (of the part of the surface of the tire or of the treatment portion of the surface of the tire) or a quantity derived therefrom (e.g. the position of the part of the surface (e.g. the position of the tire the tire)) may be stored in a suitable memory, e.g. of the data processor device.

According to an embodiment, the treatment of the treatment portion according to embodiments of the herein disclosed subject matter results in a tire having the treatment portion thereof treated with a laser beam, in particular in a tire comprising a pattern (in the treatment portion) which is also referred to as tire pattern. According to an embodiment, the tire comprising a tire pattern is a tire according to the fifth aspect. In particular, in such a case the desired pattern may be a rectangular data matrix defining a first matrix axis and a second matrix axis, wherein each code module of the data matrix has equal dimensions along the first matrix axis and the second matrix axis. According to an embodiment, the tire pattern resembles the desired pattern without (or with only a small) distortion i.e. the in such an embodiment the tire pattern is a rectangular data matrix defining a first matrix axis and a second matrix axis, wherein each code module of the data matrix has equal dimensions along the first matrix axis and the second matrix axis. It is noted that with regard to the tire pattern the term "code module" does not require the tire pattern to have a definite boundary of each code module. Rather, the tire pattern is to be understood as a pattern that may be interpreted as a digital code pattern due to a compliance of its pattern features with a code module definition (such as a QR code). For example, according to an embodiment a dark code module of a QR code may be realized with a single hole (having circular boundary with the surrounding surface of the tire) while such a dark code module is still recognized by a QR code reader as "dark module". This is in particular due to the fact that an average optical reflectivity of the dark code module is still significantly lower than the optical reflectivity of a bright code module of the QR code thus allowing a QR code reader to distinguish dark and bright code modules which is sufficient for readability of the QR code.

As used herein, reference to a computer program product is intended to be equivalent to a reference to a computer program element and/or a computer readable medium containing a computer program element for controlling a computer system to effect and/or coordinate the performance of any one of the above described methods.

The computer program may be implemented as computer readable instruction code by use of any suitable programming language, such as, for example, JAVA, C++, C# and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

Embodiments of the herein disclosed subject matter may be realized by means of a computer program element respectively software. However, embodiments of the herein disclosed subject matter may also be realized by means of one or more specific electronic circuits respectively hardware. Furthermore, embodiments of the herein disclosed subject matter may also be realized in a hybrid form, i.e. in a combination of software modules and hardware modules.

According to further embodiments of the first aspect, the method is adapted for providing the functionality of one or more of the herein disclosed embodiments and/or for providing the functionality as required by one or more of the herein disclosed embodiments, in particular of the embodiments of the second, third, fourth and fifth and sixth aspect disclosed herein.

According to further embodiments of the second aspect, the method is adapted for providing the functionality of one or more of the herein disclosed embodiments and/or for providing the functionality as required by one or more of the herein disclosed embodiments, in particular of the embodiments of the first, third, fourth and fifth and sixth aspect disclosed herein.

According to further embodiments of the third aspect, the method is adapted for providing the functionality of one or more of the herein disclosed embodiments and/or for providing the functionality as required by one or more of the herein disclosed embodiments, in particular of the embodiments of the first, second, fourth, fifth and sixth aspect disclosed herein.

According to further embodiments of the fourth aspect, the tire processing device is adapted for providing the functionality of one or more of the herein disclosed embodiments and/or for providing the functionality as required by one or more of the herein disclosed embodiments, in particular of the embodiments of the first, second, third, fifth and sixth aspect disclosed herein.

According to further embodiments of the fifth aspect, the tire is adapted for providing features resulting from one or more of the herein disclosed embodiments and/or for providing the features as required by one or more of the herein disclosed embodiments, in particular of the embodiments of the first, second, third, fourth and sixth aspect disclosed herein.

According to further embodiments of the sixth aspect, the program computer program product and in particular the program element is adapted for providing the features and/or functionality of one or more of the herein disclosed embodiments and/or for providing the features and/or functionality as required by one or more of the herein disclosed embodiments, in particular of the embodiments of the first, second, third, fourth and fifth aspect disclosed herein.

In the above there have been described and in the following there will be described exemplary embodiments of the subject matter disclosed herein with reference to a method of determining the position of a part of a surface of a tire, a method of positioning with respect to each other a part of a surface of the tire and a laser beam path, a method of treating a treatment portion of a surface of the tire, a tire processing device, a tire and a computer program product. It has to be pointed out that of course any combination of features relating to different aspects of the herein disclosed subject matter is also possible. In particular, some features have been or will be described with reference to apparatus type embodiments whereas other features have been or will be described with reference to method type embodiments. However, a person skilled in the art will gather from the above and the following description that, unless other notified, in addition to any combination of features belonging to one aspect also any combination of features relating to different aspects or embodiments, for example even combinations of features of apparatus type embodiments and features of the method type embodiments are considered to be disclosed with this application. In this regard, it should be understood that any method feature derivable from a corresponding explicitly disclosed device feature should be based on the respective function of the device feature and should not be considered as being limited to exemplary device specific elements disclosed in conjunction with the device feature. In the same way, from a corresponding explicitly disclosed method feature any device feature capable of performing the respective function of the method feature should be considered as being implicitly disclosed with this application and the device feature shall not be considered as being limited to exemplary device specific elements explicitly disclosed in this application.

The aspects and embodiments defined above and further aspects and embodiments of the herein disclosed subject matter are apparent from the examples to be described hereinafter and are explained with reference to the drawings, but to which the invention is not limited.

### BRIEF DESCRIPTION OF THE DRAWINGS

Fig. 1 shows a tire processing device according to embodiments of the herein disclosed subject matter.
Fig. 2 shows an elevated view of part of the tire processing device when viewed from line II-II in Fig. 1.
Fig. 3 schematically shows a cross-sectional view of a shape representation 200 of a surface of a tire according to embodiments of the herein disclosed subject matter.
Fig. 4 schematically shows a geometry element according to embodiments of the herein disclosed subject matter.
Fig. 5 shows a cross-sectional view of a shape representation according to embodiments of the herein disclosed subject matter.
Fig. 6 shows a geometry element identified in the shape representation of Fig. 5 assuming that the tire and hence the shape representation comprises two protrusions which are rotationally symmetric and which extend over two opposing segments of the tire.
Fig. 7 shows a shape representation according to embodiments of the herein disclosed subject matter.
Fig. 8 shows a geometry element according to embodiments of the herein disclosed subject matter.
Fig. 9 shows an exemplary spatial arrangement of the real geometry element of Fig. 3 and the reference geometry element of Fig. 4.
Fig. 10 shows the amplitude of the deviation in circumferential direction over the angular position.
Fig. 11 shows a spectrum of the deviation in the Fourier space, i.e. the respective amplitude over the order of harmonics.
Fig. 12 shows the tire processing device of Fig. 1 with the sensor device in the non-operation position.
Fig. 13 shows an example of a desired pattern according to embodiments of the herein disclosed subject matter.
Fig. 14 illustrates the generation of a transfer pattern/transfer pattern definition according to embodiments of the herein disclosed subject matter.
Fig. 15 shows a portion of a tire according to embodiments of the herein disclosed subject matter.

### DETAILED DESCRIPTION

The illustration in the drawings is schematic. It is noted that in different figures, similar or identical elements are provided with the same reference signs. Accordingly, the description of similar or identical features is not repeated in the description of subsequent figures in order to avoid unnecessary repetitions. However, it should be understood that the description of these features in the preceding figures is also valid for the subsequent figures unless noted otherwise.

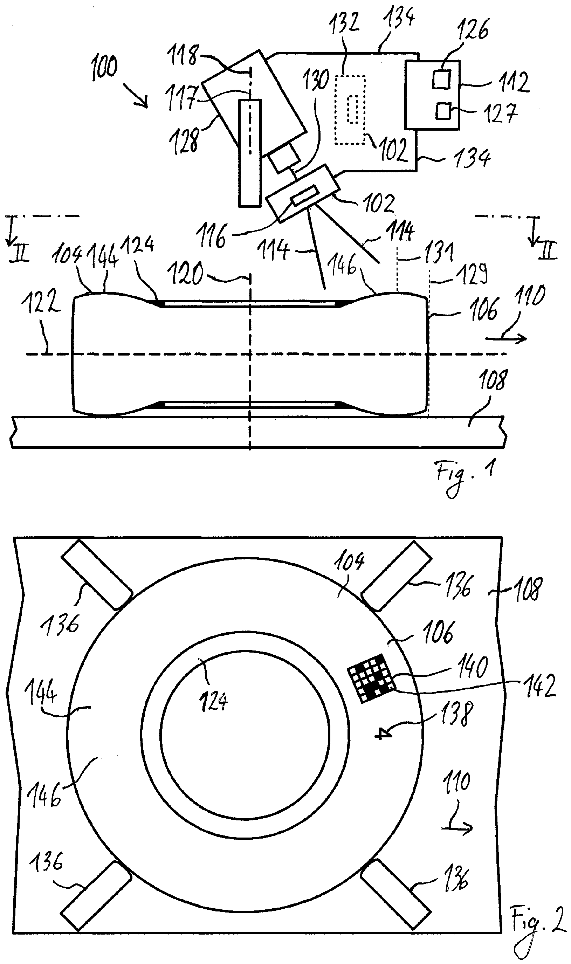

Fig. 1 shows a tire processing device 100 according to embodiments of the herein disclosed subject matter.

The tire processing device 100 comprises a sensor device 102 for determining a shape representation of part 146 of the surface 104 of a tire 106. According to an embodiment, the part 146 of the surface 104 is defined by a sidewall 144 and a bead 124 of the tire. According to an embodiment, the sensor device 102 comprises a light source (not shown in Fig. 1) for providing a light sheet 114 which generates on the tire 106 a line of light which is sensed by an off-axis sensor 116. In this way, the sensor device 102 (which is also known and referred to as light sheet sensor) is a capable of sensing the shape of the illuminated surface of the tire. By rotating the sensor device 102 about a sensor axis 117 the desired part 146 of the surface 104 can be scanned by the sensor device 102 and the shape representation of the part 146 of the surface 104 can be determined. According to an embodiment, the shape representation may be for example a digital representation of the shape (e.g. the spatial shape) of the part 146 of the surface 104. According to an embodiment, the shape representation is a height profile of the part 146 of the surface 104, e.g. a profile of the height of the part 146 of the surface 104 with respect to a plane which is perpendicular to a tire axis 120, e.g. a middle plane 122 of the tire 106 which extends through the center of gravity of the tire 106.

In accordance with a further embodiment, the tire processing device 100 comprises a laser treatment device 128. According to an embodiment, the laser treatment device 128 comprises a laser device axis 118 about which the laser treatment device is rotatable.

In accordance with an embodiment, the tire 106 is located on a support 108, e.g. a conveyor which is provided for carrying and coarse positioning of the tire 106 in a conveying direction 110, e.g. for coarse positioning of the tire 106 with respect to the sensor axis 117. According to an embodiment, the tire is positioned on the support 108 with one of its sidewalls facing the support 108, as shown in Fig. 1. According to an embodiment a light barrier or a light array 129 (i.e. a set of light barriers defining a light array plane) is provided for determining the (coarse) position of the tire 106 in the conveying direction 110. A light array 129 has the advantage of detection of the position of the tire 106 in the conveying direction 110 in two dimensions. This may improve the accuracy of the determination of the coarse position of the tire 106. According to an embodiment, a further light array 131 is provided for determining a (coarse) height of the tire parallel to the tire axis 120.

According to an embodiment, the sensor axis 117 is identical with the laser device axis 118, i.e. the laser treatment device 128 and the sensor device 102 are rotatable about the same axis 117,118, as shown in Fig. 1. According to an embodiment, during its operation (determining the shape representation), the sensor device 102 is positioned in a laser beam path 130 of the laser treatment device 128, as shown in Fig. 1. In accordance with a further embodiment, during its operation the sensor device 102 faces the part 146 of the surface 104 under the same angle which the laser beam path 130 forms with the surface 104. According to an embodiment, for an operation of the laser treatment device (during which a laser beam propagates along the laser beam path 130) the sensor device is movable out of the laser beam path 130, e.g. by pivoting the sensor device 102 into a non-operation position 132, in which the sensor device 102 is shown in dashed lines in Fig. 1.

In accordance with an embodiment, the tire processing device 100 comprises a data processor device 112 which is configured for identifying a geometry element (e.g. an edge in the shape representation that corresponds to the bead 124 of the tire 106) in the shape representation. The geometry element identified in the shape representation is referred to herein as real geometry element (as it corresponds to the real shape of the element for the actual tire). In accordance with an embodiment, the data processor device 112 comprises a memory 126 for storing the shape representation of the part 146 of the surface 104 of the tire. According to a further embodiment, the data processor device 112 includes at least one processor 127 for carrying out a computer program element which defines at least one method according to the herein disclosed subject matter. According to an embodiment, the data processor device 112 is communicatively coupled with the laser treatment device 128 and the sensor device 102, as indicated by the lines 134 in Fig. 1.

In accordance with an embodiment, the data processor device 112 is configured for determining a position of the part 146 of the surface 104 of the tire 106 based on a deviation of the real geometry element and a reference geometry element from each other. According to an embodiment, the reference geometry element corresponds to the real geometry element for a non-deformed tire which is positioned in a reference position.

In accordance with an embodiment, the data processor device 112 has stored therein (e.g. in the memory 126) the reference geometry element (e.g. electronic data defining the position of the reference geometry element (e.g. with respect to the reference position)).

Fig. 2 shows an elevated view of part of the tire processing device 100 when viewed from line II-II in Fig. 1.

When the tire has reached its destination position (coarse position) in the conveying direction 110, according to an embodiment gripping (or centering) elements 136 are moved towards the tire 106 lying on the support 108. The gripping elements 136 provide for a coarse positioning of the tire 106 transverse to the conveying direction 110 (e.g. by mechanically moving the tire 106 on the support 108). Further, if a sufficient number of gripping elements 136 is provided, the gripping elements may further assist in the coarse positioning of the tire 106 in the conveying direction 110, as shown in Fig. 2.

According to an embodiment, the tire comprises a predetermined pattern 138, e.g. a specific a character, symbol or number (number "4" in Fig. 2).

According to a further embodiment, the sensor device 102 of Fig. 1 (not shown in Fig. 2) is configured for identifying the predetermined pattern 138 on the tire 106. According to a further embodiment, the data processor device 112 (not shown in Fig. 2) is configured for determining, with respect to the tire axis 118, the position of the part 146 of the surface 104 of the tire 106, including an angular position of the part 146, based on the predetermined pattern 138. In particular, if the predetermined pattern 138 is provided only once on the surface 104 of the tire which is visible for the sensor device 102 then the predetermined pattern 138 allows to determine the angular position of the part 146 of the surface 104 in a 360 degrees range.

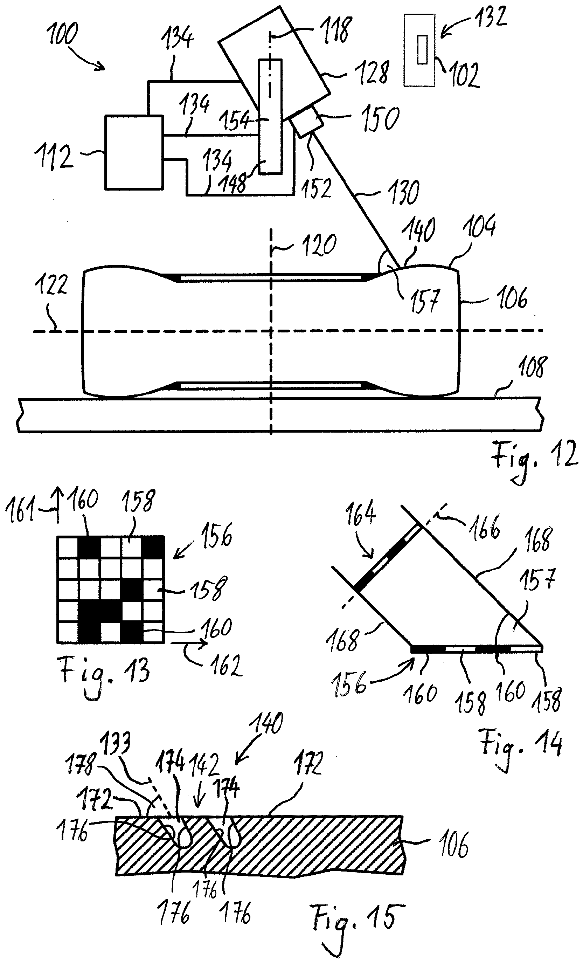

According to an embodiment, the surface 104 of the tire 106 comprises a treatment portion 140 in which a pattern 142 (also referred to herein as tire pattern), e.g. a digital code pattern as shown in Fig. 2, is provided by the laser treatment device 128 (see Fig. 1 and Fig. 12) by a laser treatment of the treatment portion 140. According to an embodiment, the part 146 of the surface 104 of the tire (which according to an embodiment includes the sidewall 144 and the bead 124) includes the treatment portion 140. Hence, in such a case the shape representation of the part 146 of the surface 104 as well as a shape representation of the treatment portion 140 are acquired in a single operation of the sensor device 102.

In accordance with an embodiment, the reference geometry element is symmetrical with respect to a reference axis (which for a non-deformed tire in a reference position corresponds to the tire axis 120 which extends perpendicular to the drawing plane of Fig. 2, not shown), in particular rotationally symmetrical with regard to the reference axis. Under suitable conditions (e.g. if the shape representation includes the entire (360 degree) of the bead and if the deformation of the tire is taken into account) the real geometry element may be used to define the center of the tire. In such a case, determining the position of the part of the surface of the tire is or includes determining the position of the center of the tire. According to an embodiment, the center of the tire sufficiently defines the position of the tire, e.g. if the tire is positioned on a well-defined plane, e.g. the support 108.

According to an embodiment, the real geometry element is a line element (one-dimensional element), e.g. a circle or part of a circle which may e.g. correspond to an edge of the tire.

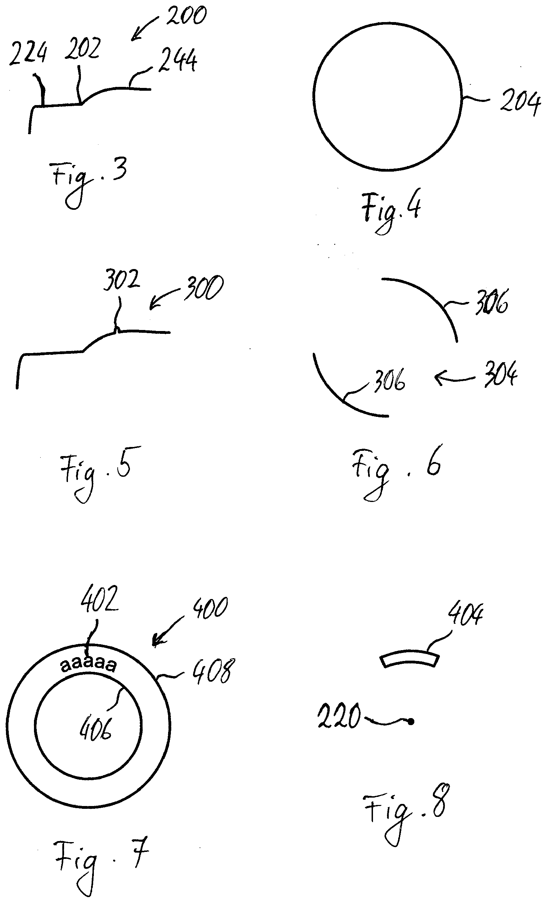

Fig. 3 schematically shows a cross-sectional view of a shape representation 200 of a surface of a tire according to embodiments of the herein disclosed subject matter. According to an embodiment, the shape representation 200 is a height profile. In accordance with an embodiment, the shape representation 200 comprises a kink 202 between a radially inner portion 224 and a radially outer portion 244 of the height profile of the tire surface. According to an embodiment, the radially inner portion 224 corresponds to a bead of a tire and the radially outer portion 244 corresponds to a sidewall of the tire. If the tire is not deformed, the kink 202 is symmetrical with respect to the tire axis (not shown in Fig. 3) and would be symmetrical with respect to the reference axis if the tire were non-deformed and positioned in the reference position. Hence, the kink 202 forms a real geometry element according to embodiments of the herein disclosed subject matter.

Fig. 4 schematically shows a plan view of a reference geometry element 204 according to embodiments of the herein disclosed subject matter. The reference geometry element 204 is associated with the real geometry element (kink 302) and for a non-deformed tire the reference geometry element 204 corresponds to the kink 202 of the shape representation 200 of Fig. 3. In accordance with an embodiment the reference geometry element 204 is a full circle, as shown in Fig. 4.

According to an embodiment, the data processing device 112 (not shown in Fig. 4) may comprise for the type of tire to be processed a set of parameter values specifying a reference geometry element. Accordingly, in the specific example of Fig. 3 and Fig. 4 identifying the real geometry element (kink 202) in the shape representation 200 may be assisted by the set of parameter values which indicate to the data processing device that in a non-deformed state the tire of the specific type located in the tire treatment device comprises the kink 202.

According to an embodiment, the shape representation is determined for the entire circumference (i.e. for 360 degrees) of the tire. According to a further embodiment the real geometry element extends over the entire circumference of the tire (and is hence circumferentially closed).

According to a further embodiment, the reference geometry element is a single segment (e.g. a 60 degree segment or a 100 degree segment) of a feature (e.g. a circle). According to a further embodiment, the reference geometry element comprises two or more segments of a feature, e.g. the circle. In this regard it is noted that generally herein specifying that the reference geometry element (or the real geometry element) is symmetrical with respect to an axis (the reference axis) does not necessarily require the reference geometry element (or the real geometry element) to extend over an entire circumference around the axis. Simply speaking, in the sense of the herein disclosed subject matter a segment of a circle which extends over less than 360 degrees is considered as being rotationally symmetric with regard to the center of the circle or an axis which extends through the center and is perpendicular to the plane of the circle.

For example, according to an embodiment only part of the shape representation 200 of Fig. 3 (e.g. a part of the shape representation which corresponds to the at least one segment) is used for identifying the real geometry element, thus leading to a real geometry element which corresponds to at least one segment of a circle. According to another embodiment, the shape representation is determined only for one or more segments of the tire (e.g. by scanning only one or more segments of the tire for determining the shape representation). Determining the shape representation only for at least one segment of the tire (and not for the entire circumference of the tire) saves scan time, memory and computation requirements. According to an embodiment the reference geometry element extends in circumferential direction beyond a segment over which the shape representation extends or, according to another embodiment, beyond a segment over which the real geometry element extends.

Fig. 5 shows a cross-sectional view of a shape representation 300 according to embodiments of the herein disclosed subject matter. According to an embodiment, the shape representation 300 of Fig. 5 is a height profile of the respective part 146 of the tire. According to an embodiment, the shape representation 300 comprises at least one protrusion 302 which extends over a segment (or, in another embodiment the entire circumference) of the tire and which is rotationally symmetric with regard to the tire axis. According to an embodiment, the at least one protrusion 302 is identified as a real geometry element.

Fig. 6 shows a reference geometry element 304 corresponding to the protrusion 302 identified in the shape representation 300 of Fig. 5, assuming that the tire and hence the shape representation 300 comprises two protrusions 302 which are rotationally symmetric and which extend over two opposing segments of the tire. Accordingly, the reference geometry element 304 comprises two segments 306 which are associated with the respective real geometry element (protrusions 302). It is noted that one segment 306 may be sufficient for determining the position of the part of the tire of which the shape representation was determined. However two or more segments 306 which are spaced in circumferential direction may provide a higher accuracy for the determination of the position of the part of the surface and/or the position of the treatment portion and/or the center of the circle, in particular if the real geometry element 302 is noisy (i.e. determined with a low signal to noise ratio, i.e. if data points of the real geometry element 302 do not lie exactly on a circle).

If the reference geometry element 204, 304 is a full circle or at least one segment of a circle, the circle equation ((x-x0)² + (y-y0)² = r²) may be fitted (e.g. by the least-squares method) to the associated real geometry element 202, 302, thus providing the coordinates (x0, y0) of the center of the circle which corresponds to the center of the tire. According to an embodiment, the tire axis 120 extends through the center of the circle perpendicular to the plane defined by the support 108 (see Fig. 1). It is noted, that the same least-squares method may be applied if the reference geometry element is a full circle (see geometry element 204 in Fig. 4) or if the reference geometry element includes one or more distinct segments (e.g. two 60 degree segments), e.g. as the reference geometry element 304 shown in Fig. 6.

Despite a computationally simple determination of the position of the tire with a least squares method and by using the circle equation as described above, according to a further embodiment the geometry element used for determining the position of the tire may be more complex (e.g. may be two-dimensional and/or may include the shape of the part 146 of the surface 104 of the tire) and may include a more sophisticated and a more accurate determination of the position of the part of the surface of the tire, e.g. by using mapping and/or filtering techniques described below. For identifying a rotationally symmetric geometry element in the shape representation pattern recognition techniques known in the art may be used - for this reason no further details are provided in this regard.

According to an embodiment, the reference geometry element is a two-dimensional element, such as a ring which has a certain width in radial direction and which is rotationally symmetric with respect to the reference axis, or a segment of such a ring. For example, according to an embodiment, the ring/ring segment may correspond to a portion of the tire in which a graphical element (e.g. a text, a pattern or a symbol) is provided on the tire. The graphical element may be provided in any suitable form, e.g. as a protrusion, depression or in a contrasting color. It should be understood that the shape representation (e.g. height profile or picture) has to be adapted to the nature of the graphical element in order to allow the graphical element to be identified in the shape representation.

Fig. 7 shows a shape representation 400 according to embodiments of the herein disclosed subject matter. The shape representation 400 is, in accordance with an embodiment, a picture of the tire showing a graphical element in the form of a text 402 which is provided in a rotationally symmetric ring segment, as shown in Fig. 7. Accordingly, an envelope for the text 402 defines a ring segment which is rotationally symmetric with regard to the tire axis and may be used as a real geometry element in the sense of the herein disclosed subject matter. According to an embodiment, an envelope for the graphical element (e.g. the text 402) in the shape representation is found by matching (e.g. fitting) of circle segments to the graphical element. According to an embodiment, the envelope for the graphical element 402 in the shape representation is identified as real geometry element. According to a further embodiment, the graphical element 402 itself is identified as real geometry element in the shape representation.

According to a further embodiment, the shape representation 400 comprises an inner boundary 406 (defining an inner diameter of the tire) and/or an outer boundary 408 (defining an outer diameter of the tire). According to an embodiment, the inner boundary 406 and/or the outer boundary 408 may be entirely or in part identified as a real geometry element in the sense of the herein disclosed subject matter.

Fig. 8 shows a reference geometry element 404 according to embodiments of the herein disclosed subject matter. In accordance with an embodiment, the reference geometry element 404 rotationally symmetric with regard to the reference axis (indicated at 220 in Fig. 8) and is associated with the envelope of the graphical element (text 402) that is according to an embodiment identified as the real geometry element in the shape representation 400 of Fig. 7.

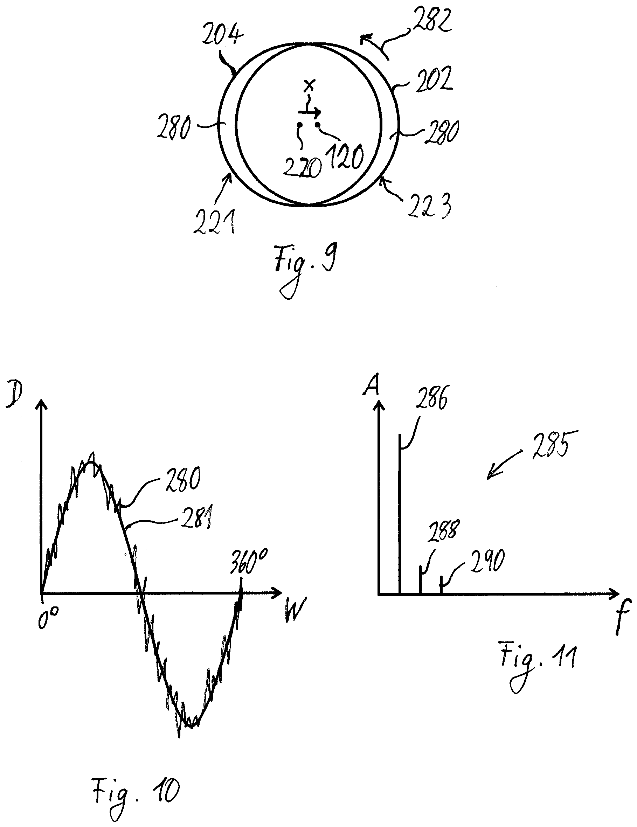

Fig. 9 to Fig. 11 schematically illustrate a method of determining a position of a part of a tire according to embodiments of the herein disclosed subject matter.

Fig. 9 shows an exemplary spatial arrangement of the real geometry element 202 of Fig. 3 and the reference geometry element 204 of Fig. 4. In accordance with an embodiment, the reference geometry element 204 is symmetrical with respect to a reference axis 220 which (at least partially) defines the reference position 221 of the tire (the reference axis defines at least the spatial component of the reference position, wherein the reference position may according to an embodiment also define an angular component of the reference position). Further shown in Fig. 9 is the real geometry element 202 which has been identified in the shape representation 200 of Fig. 3.

If the tire is non-deformed and is in the reference position (indicated at 221 in Fig. 9), the real geometry 202 would correspond to (would be identical to) the reference geometry element 204 and the tire axis 120 would correspond to the reference axis (indicated at 220 in Fig. 9). However, usually the tire and hence the real geometry element 202 is displaced from the reference position 220 by a vector x into a real position 223 and hence also the tire axis 120 is displaced from the reference axis 220 by the vector x, as shown in Fig. 9. Accordingly, there is a deviation 280 in position between the real geometry element 202 and the reference geometry element 204, wherein the deviation 280 changes in circumferential direction 282 (i.e. depending on the angular position for which the deviation is actually determined). According to an embodiment, the vector x includes an angular displacement of the tire axis 120 from the reference axis 220.

Fig. 10 shows the amplitude D of the deviation 280 in circumferential direction over the angular position W. Since the starting point (which may be arbitrarily chosen, e.g. at angle 0 degrees) and the endpoint (corresponding to the starting point + 360 degrees) of a real geometry element along the entire circumference of the tire fall on each other, the deviation 280 has the nature of a harmonic vibration, as shown in Fig. 10. Due to noise in the processing chain providing the deviation 280 (which implements methods according to embodiments of the herein disclosed subject matter) the deviation 280 usually contains some noise. After a suitable filtering (e.g. by using some kind of Fourier transformation as described below with respect to Fig. 11) the noise may removed or at least reduced, thereby providing a filtered deviation 281, as shown in Fig. 10.

Fig. 11 shows a spectrum 285 of the deviation 280 in the Fourier space, i.e. a respective amplitude A over the order of the harmonics f. The spectrum 285 may be a discrete spectrum as shown in Fig. 11 or a continuous spectrum (not shown). According to an embodiment, the spectrum 285 comprises a fundamental component 286 and higher harmonics 288, 290. Higher harmonics may occur e.g. due to a deformation of the tire (leading to a respective change in the position of the part 146 of the surface) and/or due to noise which may occur during determining the shape representation, identifying the real geometry element, etc. According to an embodiment, higher harmonics are canceled from the spectrum 285 by applying a suitable filter function, e.g. a low-pass filter function which cancels harmonics of second order or higher. According to a further embodiment, the filter function cancels harmonics of the third order or higher. The thus filtered spectrum can be re-transformed into the real space (shown in Fig. 10), thus providing a smoother, filtered deviation, as shown in Fig. 10 at 281.

The filtered deviation 281 may then be used to determine from the filtered deviation 281 the position of the part of the surface of the tire. For example the filtered deviation may be used to determine the vector x shown in Fig. 9 which corresponds to the displacement of the tire with respect to the reference position, in particular if there is no (or little) deformation of the tire.

A deformation of the tire leads to a further deviation in position between the real geometry element 202 and the reference geometry element 204. In accordance with an embodiment of the herein disclosed subject matter, for a deformed tire a single vector x may not sufficient to describe the deviation of the real geometry element 202 from the reference geometry element 204. However, one approach to such a complex situation is to consider a plurality of small segments (or portions) of the reference geometry element and determine a plurality of vectors which describe the deviation (displacement) of each segment (or portion) of the real geometry element 202 from an associated segment of the reference geometry element 204. The set of vectors then describe the deviation of the real geometry element 202 and the reference geometry element 204 from each other. Insofar, the set of vectors defines the position of the real geometry element 202 and hence the position of the part 146 of the surface. In this sense it is clear that a larger real geometry element 202 provides a more accurate position of the part 146 of the surface. In particular, if the part 146 of the surface includes the treatment portion (or if a shape representation of the treatment portion is determined), the position of the treatment portion can accurately be determined, e.g. analogous to the above described method for determining the position of the part of the surface.

Fig. 12 shows the tire processing device 100 of Fig. 1 with the sensor device 102 in the non-operation position 132, thereby allowing a laser beam, propagating along the laser beam path 130, to reach the tire 106. Further, compared to Fig. 1 in Fig. 2 some details of the tire processing device 100 are omitted for ease of illustration.

According to an embodiment, the position of the part 146 of the surface 104 (in particular the lateral position and/or the angular position of the part of the surface) and optionally the shape representation of the part 146 and/or the shape representation of the treatment portion 140 are used by the data processor device 112 to position the laser beam path 130 (see Fig. 1) and the part 146 of the surface 104 of the tire 106 relative to each other, e.g. by rotating the laser treatment device 128 about the laser device axis 118 to thereby angularly position the tire 106 and the laser beam path 130 with respect to each other. To this end, the tire processing device 100 comprises a first actuator 148 which can be accordingly activated by the data processor device 112, to rotate the laser treatment device 128 about the laser device axis 118. Hence, in an embodiment the angular position of the laser beam path 130 with respect to the tire 106 is adjusted by the first actuator 148 under control of the data processor device 112 and based on the position of the part 146 of the surface 104.

According to a further embodiment, the tire processing device 100 comprises a second actuator 150 for positioning the laser beam path 130 with its focus position with respect to the part 146 of the surface 104 (e.g. depending on the lateral position of the tire 106). According to an embodiment, the second actuator 150 is part of the laser treatment device 128, as shown in Fig. 12. According to an embodiment, the second actuator 150 operates the optical system of the laser treatment device to thereby change the focus position of the laser beam path 130 along the laser beam path 130, e.g. to position the focus of the laser beam path of 130 on the surface of the tire in the treatment portion 140 based on the shape representation of the treatment portion 140 and/or the shape representation of the part 146 of the surface 104.

While the first actuator 148 and the second actuator 150 may be sufficient for a proper operation of the tire processing device 100, further actuators may be provided to further improve the positioning of the laser beam path 130 and the tire 106 with respect to each other. Such improved positioning may result in an improved accuracy of the laser treatment of the tire 106. Accordingly, according to an embodiment, the further actuators may be provided for spatially positioning the laser beam path 130 and the tire 106 with respect to each other, e.g. to change the spatial position of the laser device axis 118, e.g. to move the laser device axis 118 in the middle plane 122 (i.e. in lateral direction); to change the orientation of the laser device axis 118 with respect to the tire axis 120; to pivot the laser treatment device about a pivot axis perpendicular to the laser device axis 118 (e.g. perpendicular to the drawing plane of Fig. 12); to change the distance between the laser device axis 118 and an beam output 152 of the laser treatment device 128, wherein the beam output 152 determines the starting point for the laser beam path 130; etc. According to an embodiment, the further actuators and the first actuator 148 are provided by an actuator device 154. It is noted that by changing a distance between the laser device axis 118 and the beam output 152 an angle 157 which the laser beam path 130 forms with the treatment portion 140 may be varied while maintaining the position of end of the laser beam path 130 on the surface 104 of the tire. Communicative coupling of the actuators 148, 150, 154 and the data processor device 112 is indicated at 134 in Fig. 12. It should be understood, that the communicative coupling 134 may be implemented in any suitable way, e.g. wired or wireless, as long as the communicative coupling allows to operate the tire processing device 100 and its individual components according to embodiments of the herein disclosed subject matter.

According to an embodiment, the angle 157, which the laser beam path 130 forms with the treatment portion 140, is an acute angle which is smaller than 80 degrees, as shown in Fig. 12. According to a further embodiment, the angle 157 is 90 degrees or at least close to 90 degrees, e.g. between 88 degrees and 90 degrees. According to an embodiment, the laser beam path is maintained parallel to the tire axis 120.

According to an embodiment, the position of the part 146 of the surface 104 (e.g. in an embodiment the position of the center of the tire) is taken into account by the data processor device 112 when adjusting an angular position of the laser beam path 130. According to a further embodiment, the focus position of the laser beam path 130 is adjusted by taking into account the shape representation of the treatment portion 140 (in particular the position of the treatment portion 140 and optionally by taking into account also the position of the part 146 of the surface 104). According to an embodiment, the shape representation of the treatment portion 140 is a height profile of the treatment portion 140 which describes height variations over the treatment portion 140. According to an embodiment, the height profile of the treatment portion 140 provides relative height information. According to another embodiment, the height profile of the treatment portion provides absolute height information e.g. with respect to the middle plane 122, with respect to the surface of the support 108, or with respect to a fixed spatial position of the actuator device 154, or with respect to the reference position 221 (see Fig. 9).

According to an embodiment, the above described positioning of the part 146 of the surface 104 and the laser beam path 130 with respect to each other is performed once for the treatment portion 140. In such a case, the laser beam path 130 described can be an initial laser beam path with which the treatment of the treatment portion begins, or can be a central laser beam path which ends in the center of the treatment portion, just to name some examples. In another embodiment, the above described positioning of the tire 106 and the laser beam path 130 with respect to each other is performed several times for the treatment portion 140 or continuously during treating the treatment portion 140 with a laser beam from the laser treatment device 128.

According to an embodiment, treatment of the treatment portion 140 with a laser beam is performed to generate in the treatment portion a pattern (tire pattern) which corresponds to a desired pattern. Fig. 13 shows an example of a desired pattern 156 according to embodiments of the herein disclosed subject matter. According to an embodiment, the desired pattern 156 is an optically readable digital code having a plurality of code modules 158, 160 which have different optical reflectivity and are hence optically distinguishable. In particular, according to an embodiment, the desired pattern is a rectangular data matrix defining a first matrix axis 161 and a second matrix axis 162 wherein each code module of the data matrix has equal dimensions along the first matrix axis 161 and the second matrix axis 162, as shown in Fig. 13. According to an embodiment, the desired pattern has two different types of code modules, bright modules 158 and dark modules 160. According to an embodiment, the bright modules 158 correspond to the non-altered surface of the tire 106 whereas the dark modules 160 are structured (patterned) by the treatment with the laser beam of the laser treatment device 128. Moving the laser beam over the treatment portion 114 to generate the dark modules 160 may be performed by using a dedicated portion of the optical system of the laser treatment device 128, e.g. a galvanometer scanner, and/or by suitably controlling the actuators (or the actuator device) 148, 150, 154 which are provided for adjusting the position of the tire 106 and the laser beam path 130 with respect to each other.

Fig. 14 illustrates the generation of a transfer pattern/transfer pattern definition according to embodiments of the herein disclosed subject matter.

As already described with regard to Fig. 12, according to an embodiment the laser beam path 130 forms an angle 157 with the treatment portion 140. In order to generate the desired pattern 156 in the treatment portion 140 (and in particular to maintain the equal dimensions of the code modules along the first matrix axis 161 and the second matrix axis 162) according to an embodiment a transfer pattern definition is generated based on the tire pattern definition which defines the desired pattern 156. A transfer pattern 164, which is defined by the transfer pattern definition, corresponds to a projection of the desired pattern 156 in the treatment portion 140 onto a virtual plane 166 which is perpendicular to the laser beam path. In Fig. 14 lines 168 are parallel to and indicate the direction of the laser beam path wherein in Fig. 14 the desired pattern 156 is assumed to lay in the plane of the treatment portion 140. It is noted that in Fig. 14 the desired pattern 156 as well as the transfer pattern 164 are drawn with a certain thickness in order to facilitate illustrating the bright and dark modules 158, 160. Nevertheless it should be understood that the transfer pattern 164 and the desired pattern 156 in Fig. 14 extend perpendicular to the drawing plane. It is noted that generally the treatment portion 140 is not flat and in such a case the curvature (shape representation) of the treatment portion 140 may be taken into account for generating the transfer pattern 164.

Fig. 15 shows a portion of a tire 106 according to embodiments of the herein disclosed subject matter. The tire 106 comprises a pattern 142 (also referred to as tire pattern) generated by a laser beam of the laser treatment device 128 of Fig. 12. Further, the tire 106 comprises a surface 172 surrounding the tire pattern 142. According to an embodiment, during the generation of the tire pattern 142 the laser beam path 130 formed an angle different from 90 degrees with the surrounding surface 172. Compared to a desired pattern 156 (see e.g. Fig. 13) a distortion of the tire pattern (142) due to the difference of the angle from 90 degrees was at least partially prevented by treating the treatment portion (140) with the laser beam according to suitable embodiments of the herein disclosed subject matter, e.g. by generating and treating the treatment portion 140 according to a transfer pattern definition described with regard to Fig. 14. According to an embodiment, the treatment portion 140 is treated according to the transfer pattern definition, wherein a transfer pattern 164 defined by the transfer pattern definition corresponds to a projection of the desired pattern 156 in the treatment portion 140 onto a virtual plane 166 which is perpendicular to the laser beam path 130 (see Fig. 14).

Since during treating the treatment portion 140 with the laser beam the laser beam path formed an angle different from 90 degrees with the surrounding surface 172, the pattern 142 comprises a plurality of inclined recesses 174, two of which are shown in Fig. 15. According to an embodiment, the plurality of inclined recesses 174 have two wall portions 176 which face each other and define a middle line 133 therebetween, wherein the middle line 133 is equally distanced from the wall portions 176 in a plane perpendicular to the middle line 133. The middle line 133 corresponds to the center of the laser beam (and the center of the laser beam path 130 (not shown in Fig. 15). Hence, the middle line 133 forms with the surrounding surface 172 an angle 178 which is different from 90 degrees.

With regard to Fig. 13 it is noted that according to an embodiment each dark module 160 comprises at least one recess 174.

Having regard to the subject matter disclosed herein, it should be mentioned that generally a tire treatment device and in particular its data processor device may be configured to implement any method as disclosed herein.

Further, it should be noted that according to embodiments a separate entity (e.g. a software module, a hardware module or a hybrid module) may be provided for each of the functions disclosed herein. According to other embodiments, an entity (e.g. a software module, a hardware module or a hybrid module (combined software/hardware module)) is configured for providing two or more functions as disclosed herein. According to still other embodiments, two or more entities (e.g. part, portion, surface, component, unit, structure or device) are configured for providing together a function as disclosed herein.

According to embodiments of the invention, any suitable entity (e.g. components, units and devices) disclosed herein may at least in part provided in the form of respective computer programs which enable at least one processor (e.g. the data processor device) to provide the functionality of the respective entities as disclosed herein. According to other embodiments, any suitable entity disclosed herein may be provided in hardware. According to other - hybrid - embodiments, some entities may be provided in software while other entities are provided in hardware.

It should be noted that any entity disclosed herein (e.g. components, units and devices) are not limited to a dedicated entity as described in some embodiments. Rather, the herein disclosed subject matter may be implemented in various ways and with various granularity on device level or on software module level while still providing the specified functionality.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

Further, it should be noted that while the drawings show a particular combination of several embodiments of the herein disclosed subject matter, any other combination of embodiment is also possible and is considered to be disclosed with this application.

In order to recapitulate some of the above described embodiments of the present invention one can state:
It is described a method of positioning with respect to each other a part 146 of a surface 104 of a tire 106 and a laser beam path 130 of a laser treatment device 128, the method comprising: determining the position of the part 146 by: determining a shape representation of the part 146; identifying in the shape representation a real geometry element which corresponds to a symmetrical reference geometry element if the tire is non-deformed and/or positioned in a reference position; determining the position of the part 146 based on a deviation of the real geometry element and the reference geometry element from each other; the method of positioning further comprising: depending on the position of the part 146, positioning the laser beam path 130 and the part 146 relative to each other. Further, a tire processing device 100, a tire 106 and a computer program product is described.

## Claims

1. Method of treating a treatment portion (140) of a surface (104) of a tire (106) with a laser beam of a laser treatment device (128), the method comprising:
positioning of a part (146) of the surface (104) and the laser beam path (130);
subsequently treating the treatment portion (140) with the laser beam, the laser beam being generated by the laser treatment device (128) and propagating along the laser beam path (130);
the method further comprising: receiving a tire pattern definition, the tire pattern definition defining a desired pattern (156) to be generated in the treatment portion (140) by treating the treatment portion (140) with the laser beam;
generating a transfer pattern definition based on the tire pattern definition wherein a transfer pattern (164) defined by the transfer pattern definition corresponds to a projection of the desired pattern (156) in the treatment portion (140) onto a virtual plane (166) which is perpendicular to the laser beam path (130);
wherein treating the treatment portion (140) with the laser beam is performed according to the transfer pattern definition;
wherein the desired pattern (156) is a rectangular data matrix defining a first matrix axis (161) and a second matrix axis (162), wherein a code module (158, 160) of the data matrix has equal dimensions along the first matrix axis (161) and the second matrix axis (162);
wherein the positioning of a part (146) of the surface (104) and the laser beam path (130) comprises:
determining a position of the part (146) of the surface (104) of the tire (106);
depending on the determined position of the part (146) of the surface (104), positioning the laser beam path (130) and the part (146) of the surface (104) relative to each other; wherein positioning the laser beam path (130) and the part (146) of the surface (104) relative to each other includes in particular at least one of:
(i) adjusting a spatial position of the laser treatment device (128) and the part (146) of the surface (104) relative to each other;
(ii) adjusting an orientation of the laser beam path (130) and the part (146) of the surface (104) relative to each other;
(iii) adjusting a position of a focus of the laser beam path (130) in a direction along the laser beam path (130); and
wherein determining a position of the part (146) of the surface (104) of the tire (106) comprises:
determining a shape representation (200, 300, 400) of the part (146) of the surface (104), the shape representation being indicative of a shape of the part (146) of the surface (104);
identifying a real geometry element (202, 302, 402) in the shape representation (200, 300, 400), the real geometry element (202, 302, 402) corresponding to a reference geometry element (204, 304, 404) if the tire (106) is non-deformed and/or positioned in a reference position (221), the reference geometry element (204, 304, 404) being symmetrical with respect to a reference axis (220), the reference axis (220) corresponding to a tire axis (120) if the tire (106) is non-deformed and/or positioned in the reference position (221), and the tire axis (120) being an axis of rotation of the tire (106);
determining the position of the part (146) of the surface (104) based on a deviation of the real geometry element (202, 302, 402) and the reference geometry element (204, 304, 404) from each other.

2. Method according to claim 1, wherein
the part (146) of the surface (104) is defined by a lateral part of the tire (106) and/or
the part (146) of the surface (104) includes at least part of a bead (124) of the tire (106) and the at least part of the bead defines the real geometry element.

3. Method according to any one of claims 1 or 2, wherein determining the position based on the deviation includes
filtering the deviation, in particular by using a Fourier transformation, in order to obtain a filtered deviation; and
determining the position of the part of the surface based on the filtered deviation.

4. Method according to any one of claims 1 to 3, wherein:
the shape representation (200, 300, 400) is a height profile of the part (146) of the surface (104) or is a picture of the part (146) of the surface (104), wherein the height profile is in particular determined with respect to a plane which is perpendicular to the tire axis (120).

5. Method according to any one of claims 1 to 4, further comprising:
identifying a predetermined pattern (138) on the tire (106);
wherein determining the position of the part (146) of the surface (104) includes determining an angular position of the part (146) of the surface (104) with respect to the tire axis (120) based on the angular position of the predetermined pattern (138).

6. Method according to any one of claims 1 to 5, further comprising:
determining a shape representation (200, 300, 400) of a treatment portion (140) of the surface (104) of the tire (106), wherein the treatment portion (140) is to be treated with a laser beam generated by the laser treatment device (128) and propagating along the laser beam path (130); and
said positioning of the laser beam path (130) and the part (146) of the surface of the tire (106) relative to each other is performed also depending on the shape representation (200, 300, 400) of the treatment portion (140).

7. Method according to any one of claims 1 to 6, wherein the laser treatment device (128) is rotatable about a laser device axis (118), the method further comprising:
coarse positioning the laser treatment device (128) and the tire (106) with respect to each other by aligning the laser device axis (118) with the tire axis (120).

8. Tire processing device comprising:
a sensor device (102) for determining a shape representation (200, 300, 400) of a part (146) of a surface (104) of a tire (106);
a data processor device (112) configured for identifying a real geometry element (202, 302, 402) in the shape representation (200, 300, 400), the real geometry element corresponding to a reference geometry element (204, 304, 404) if the tire (106) is non-deformed and/or positioned in a reference position (221); the reference geometry element (204, 304, 404) being symmetrical with respect to a reference axis (220), the reference axis (220) corresponding to a tire axis (120) If the tire (106) is non-deformed and/or positioned in the reference position (221), and, the tire axis (120) being an axis of rotation of the tire (106);
the data processor device (112) being configured for determining the position of the part (146) of the surface (104) based on a deviation of the real geometry element (202, 302, 402) and the reference geometry element (204, 304, 404) from each other;
the tire processing device further comprising:
a laser treatment device (128);
an actuator (148, 150, 154) configured for positioning with respect to each other the part (146) of the surface (104) and a laser beam path (130) of the laser treatment device (128) depending on the determined position of the part (146) of the surface (104);
the data processor device (112) being configured for operating the laser treatment device (128) after positioning the part (146) of the surface (104) and the laser beam path (130) with respect to each other, wherein said operating of the laser treatment device (128) includes operating the laser treatment device (128) to generate the laser beam, the laser beam propagating along the laser beam path (130) for treatment of a treatment portion (140) of the surface (104) of the tire (106) for generating a pattern (142), referred to as tire pattern, in the treatment portion (140);
wherein, during the generation of the tire pattern (142), the laser beam path (130) forms an angle different from 90 degrees with a surrounding surface (172) surrounding the tire pattern (142); and
wherein compared to a desired pattern (156) a distortion of the tire pattern (142) due to the difference of the angle from 90 degrees is at least partially prevented by treating the treatment portion (140) with the laser beam according to a transfer pattern definition, wherein a transfer pattern (164) defined by the transfer pattern definition corresponds to a projection of the desired pattern (156) in the treatment portion (140) onto a virtual plane (166) which is perpendicular to the laser beam path (130).

9. Tire (106) comprising:
a pattern (142), referred to as tire pattern, generated in a treatment portion (140) of the tire (106) by a laser beam propagating along a laser beam path (130);
a surrounding surface (172) surrounding the tire pattern (142), wherein the tire pattern (142) comprises a plurality of inclined recesses (174), wherein the plurality of inclined recesses (174) have two wall portions 176 which face each other and define a middle line (133) therebetween, wherein the middle line (133) is equally distanced from the wall portions (176) in a plane perpendicular to the middle line (133), and wherein the middle line (133) forms with the surrounding surface (172) an angle (178) which is different from 90 degrees;
wherein compared to a desired pattern (156) a distortion of the tire pattern (142) due to the difference of the angle from 90 degrees was at least partially prevented by treating the treatment portion (140) with the laser beam according to a transfer pattern definition, wherein a transfer pattern (164) defined by the transfer pattern definition corresponds to a projection of the desired pattern (156) in the treatment portion (140) onto a virtual plane (166) which is perpendicular to the laser beam path (130) a center of which corresponds to the middle line (133); and
wherein the desired pattern (156) is a rectangular data matrix defining a first matrix axis (161) and a second matrix axis (162), wherein each code module (158, 160) of the data matrix has equal dimensions along the first matrix axis (161) and the second matrix axis (162).

10. Computer program product comprising a program element, the program element being configured for carrying out the method according to any one of claims 1 to 7 when the program element is executed on a data processor device (112).

## Patentansprüche

1. Verfahren zum Bearbeiten eines Bearbeitungsabschnitts (140) einer Oberfläche (104) eines Reifens (106) mit einem Laserstrahl einer Laserbearbeitungsvorrichtung (128), wobei das Verfahren aufweist:
Positionieren eines Teils (146) der Oberfläche (104) und des Laserstrahlweges (130);
anschließendes Bearbeiten des Bearbeitungsabschnitts (140) mit dem Laserstrahl, wobei der Laserstrahl von der Laserbearbeitungsvorrichtung (128) erzeugt wird und sich entlang des Laserstrahlwegs (130) ausbreitet;
wobei das Verfahren ferner aufweist: Empfangen einer Reifenmusterdefinition, wobei die Reifenmusterdefinition ein gewünschtes Muster (156) definiert, das in dem Bearbeitungsabschnitt (140) durch Bearbeiten des Bearbeitungsabschnitts (140) mit dem Laserstrahl erzeugt werden soll;
Erzeugen einer Übertragungsmusterdefinition basierend auf der Reifenmusterdefinition, wobei ein durch die Übertragungsmusterdefinition definiertes Übertragungsmuster (164) einer Projektion des gewünschten Musters (156) im Bearbeitungsabschnitt (140) auf eine virtuelle Ebene (166) entspricht, die senkrecht zu dem Laserstrahlweg (130) steht;
wobei das Bearbeiten des Bearbeitungsabschnitts (140) mit dem Laserstrahl gemäß der Übertragungsmusterdefinition durchgeführt wird;
wobei das gewünschte Muster (156) eine rechteckige Datenmatrix ist, die eine erste Matrixachse (161) und eine zweite Matrixachse (162) definiert, wobei ein Codemodul (158, 160) der Datenmatrix gleiche Abmessungen entlang der ersten Matrixachse (161) und der zweiten Matrixachse (162) aufweist;
wobei die Positionierung eines Teils (146) der Oberfläche (104) und des Laserstrahlweges (130) aufweist:
Ermitteln einer Position des Teils (146) der Oberfläche (104) des Reifens (106);
Abhängig von der ermittelten Position des Teils (146) der Oberfläche (104), Positionieren des Laserstrahlweges (130) und des Teils (146) der Oberfläche (104) relativ zueinander; wobei das Positionieren des Laserstrahlweges (130) und des Teils (146) der Oberfläche (104) relativ zueinander insbesondere mindestens eines aufweist von:
(i) Einstellen einer räumlichen Position der Laserbearbeitungsvorrichtung (128) und des Teils (146) der Oberfläche (104) relativ zueinander;
(ii) Einstellen einer Orientierung des Laserstrahlweges (130) und des Teils (146) der Oberfläche (104) relativ zueinander;
(iii) Einstellen einer Position eines Fokus des Laserstrahlweges (130) in einer Richtung entlang des Laserstrahlweges (130); und
wobei das Ermitteln einer Position des Teils (146) der Oberfläche (104) des Reifens (106) aufweist:
Ermitteln einer Formdarstellung (200, 300, 400) des Teils (146) der Oberfläche (104), wobei die Formdarstellung eine Form des Teils (146) der Oberfläche (104) angibt;
Identifizieren eines realen Geometrieelements (202, 302, 402) in der Formdarstellung (200, 300, 400), wobei das reale Geometrieelement (202, 302, 402) einem Referenzgeometrieelement (204, 304, 404) entspricht, wenn der Reifen (106) nicht verformt und/oder in einer Referenzposition (221) positioniert ist, wobei das Referenzgeometrieelement (204, 304, 404) symmetrisch zu einer Referenzachse (220) ist, wobei die Referenzachse (220) einer Reifenachse (120) entspricht, wenn der Reifen (106) nicht verformt und/oder in der Referenzposition (221) positioniert ist, und die Reifenachse (120) eine Drehachse des Reifens (106) ist;
Ermitteln der Position des Teils (146) der Oberfläche (104) basierend auf einer Abweichung des realen Geometrieelements (202, 302, 402) und des Referenzgeometrieelements (204, 304, 404) voneinander.

2. Verfahren nach Anspruch 1, wobei
der Teil (146) der Oberfläche (104) durch einen seitlichen Teil des Reifens (106) definiert ist und/oder
der Teil (146) der Oberfläche (104) mindestens einen Teil eines Wulstes (124) des Reifens (106) aufweist und der mindestens eine Teil des Wulstes das reale Geometrieelement definiert.

3. Verfahren nach einem der Ansprüche 1 oder 2, wobei das Ermitteln der Position basierend auf der Abweichung folgendes aufweist
Filtern der Abweichung, insbesondere unter Verwendung einer FourierTransformation, um eine gefilterte Abweichung zu erhalten; und
Ermitteln der Position des Teils der Oberfläche basierend auf der gefilterten Abweichung.

4. Verfahren nach einem der Ansprüche 1 bis 3, wobei:
die Formdarstellung (200, 300, 400) ein Höhenprofil des Teils (146) der Oberfläche (104) oder ein Bild des Teils (146) der Oberfläche (104) ist, wobei das Höhenprofil insbesondere bezüglich einer Ebene ermittelt wird, die senkrecht zur Reifenachse (120) steht.

5. Verfahren nach einem der Ansprüche 1 bis 4, ferner aufweisend:
Identifizieren eines vorbestimmten Musters (138) auf dem Reifen (106);
wobei das Ermitteln der Position des Teils (146) der Oberfläche (104) das Ermitteln einer Winkelposition des Teils (146) der Oberfläche (104) in Bezug auf die Reifenachse (120) basierend auf der Winkelposition des vorbestimmten Musters (138) aufweist.

6. Verfahren nach einem der Ansprüche 1 bis 5, ferner aufweisend:
Ermitteln einer Formdarstellung (200, 300, 400) eines Bearbeitungsabschnitts (140) der Oberfläche (104) des Reifens (106), wobei der Bearbeitungsabschnitt (140) mit einem von der Laserbearbeitungsvorrichtung (128) erzeugten und sich entlang des Laserstrahlweges (130) ausbreitenden Laserstrahl bearbeitet werden soll; und
die Positionierung des Laserstrahlweges (130) und des Teils (146) der Oberfläche des Reifens (106) relativ zueinander auch in Abhängigkeit von der Formdarstellung (200, 300, 400) des Bearbeitungsabschnitts (140) durchgeführt wird.

7. Verfahren nach einem der Ansprüche 1 bis 6, wobei die Laserbearbeitungsvorrichtung (128) um eine Laservorrichtungsachse (118) drehbar ist, wobei das Verfahren ferner aufweist:
Grobpositionierung der Laserbearbeitungsvorrichtung (128) und des Reifens (106) zueinander durch Ausrichten der Laservorrichtungsachse (118) mit der Reifenachse (120).

8. Reifenbearbeitungsvorrichtung, aufweisend:
eine Sensorvorrichtung (102) zum Ermitteln einer Formdarstellung (200, 300, 400) eines Teils (146) einer Oberfläche (104) eines Reifens (106);
eine Datenverarbeitungsvorrichtung (112), die zum Identifizieren eines realen Geometrieelements (202, 302, 402) in der Formdarstellung (200, 300, 400) konfiguriert ist, wobei das reale Geometrieelement einem Referenzgeometrieelement (204, 304, 404) entspricht, wenn der Reifen (106) nicht verformt und/oder in einer Referenzposition (221) positioniert ist; wobei das Referenzgeometrieelement (204, 304, 404) symmetrisch zu einer Referenzachse (220) ist, wobei die Referenzachse (220) einer Reifenachse (120) entspricht, wenn der Reifen (106) nicht verformt und/oder in der Referenzposition (221) positioniert ist, und wobei die Reifenachse (120) eine Drehachse des Reifens (106) ist;
die Datenverarbeitungseinrichtung (112) konfiguriert ist, um die Position des Teils (146) der Oberfläche (104) basierend auf einer Abweichung des realen Geometrieelements (202, 302, 402) und des Referenzgeometrieelements (204, 304, 404) voneinander zu ermitteln;
wobei die Reifenverarbeitungsvorrichtung ferner aufweist:
eine Laserbearbeitungsvorrichtung (128);
einen Aktor (148, 150, 154), der konfiguriert ist, um den Teil (146) der Oberfläche (104) und einen Laserstrahlweg (130) der Laserbearbeitungsvorrichtung (128) relativ zueinander zu positionieren in Abhängigkeit von der ermittelten Position des Teils (146) der Oberfläche (104);
wobei die Datenverarbeitungsvorrichtung (112) konfiguriert ist, zum Betreiben der Laserbearbeitungsvorrichtung (128) nach dem Positionieren des Teils (146) der Oberfläche (104) und des Laserstrahlweges (130) in Bezug aufeinander, wobei das Betreiben der Laserbearbeitungsvorrichtung (128) das Betreiben der Laserbearbeitungsvorrichtung (128) zum Erzeugen des Laserstrahls aufweist, wobei sich der Laserstrahl entlang des Laserstrahlweges (130) ausbreitet zur Bearbeitung eines Bearbeitungsabschnitts (140) der Oberfläche (104) des Reifens (106) zum Erzeugen eines Musters (142), das als Reifenmuster bezeichnet wird, in dem Bearbeitungsabschnitt (140);
wobei während der Erzeugung des Reifenmusters (142) der Laserstrahlweg (130) mit einer umgebenden Oberfläche (172), welche das Reifenmuster (142) umgibt, einen Winkel bildet, der von 90 Grad abweicht; und
wobei im Vergleich zu einem gewünschten Muster (156) eine Verzerrung des Reifenmusters (142) aufgrund der Abweichung des Winkels von 90 Grad zumindest teilweise verhindert wird durch Bearbeiten des Bearbeitungsabschnitts (140) mit dem Laserstrahl gemäß einer Übertragungsmusterdefinition, wobei ein durch die Übertragungsmusterdefinition definiertes Übertragungsmuster (164) einer Projektion des gewünschten Musters (156) im Bearbeitungsabschnitt (140) auf eine virtuelle Ebene (166) entspricht, die senkrecht zu dem Laserstrahlweg (130) steht.

9. Reifen (106), aufweisend:
ein Muster (142), das als Reifenmuster bezeichnet wird, welches in einem Bearbeitungsabschnitt (140) des Reifens (106) durch einen sich entlang eines Laserstrahlwegs (130) ausbreiteten Laserstrahl erzeugt wurde;
eine das Reifenmuster (142) umgebende Oberfläche (172), wobei das Reifenmuster (142) eine Vielzahl von geneigten Aussparungen (174) aufweist, wobei die Vielzahl von geneigten Aussparungen (174) zwei Wandabschnitte 176 aufweist, die einander zugewandt sind und eine Mittellinie (133) dazwischen definieren, wobei die Mittellinie (133) in einer Ebene senkrecht zu der Mittellinie (133) von den Wandabschnitten (176) gleich beabstandet ist, und wobei die Mittellinie (133) mit der umgebenden Oberfläche (172) einen Winkel (178) bildet, der von 90 Grad abweicht;
wobei im Vergleich zu einem gewünschten Muster (156) eine Verzerrung des Reifenmusters (142) aufgrund der Abweichung des Winkels von 90 Grad zumindest teilweise verhindert wurde, indem der Bearbeitungsabschnitt (140) mit dem Laserstrahl gemäß einer Übertragungsmusterdefinition bearbeitet wurde, wobei ein durch die Übertragungsmusterdefinition definiertes Übertragungsmuster (164) einer Projektion des gewünschten Musters (156) im Bearbeitungsabschnitt (140) auf eine virtuelle Ebene (166) entspricht, die senkrecht zu dem Laserstrahlweg (130) steht, dessen Zentrum der Mittellinie (133) entspricht; und
wobei das gewünschte Muster (156) eine rechteckige Datenmatrix ist, die eine erste Matrixachse (161) und eine zweite Matrixachse (162) definiert, wobei jedes Codemodul (158, 160) der Datenmatrix gleiche Abmessungen entlang der ersten Matrixachse (161) und der zweiten Matrixachse (162) aufweist.

10. Computerprogrammprodukt, aufweisend ein Programmelement, wobei das Programmelement konfiguriert ist, um das Verfahren nach einem der Ansprüche 1 bis 7 auszuführen, wenn das Programmelement auf einer Datenprozessorvorrichtung (112) ausgeführt wird.

## Revendications

1. Procédé de traitement d'une portion de traitement (140) d'une surface (104) d'un pneu (106) par un faisceau laser d'un dispositif de traitement laser (128), le procédé comprenant :
le positionnement d'une partie (146) de la surface (104) et du trajet du faisceau laser (130) ;
puis le traitement de la portion de traitement (140) par le faisceau laser, le faisceau laser étant généré par le dispositif de traitement laser (128) et se propageant le long du trajet du faisceau laser (130) ;
le procédé comprenant en outre : la réception d'une définition de motif de pneu, la définition de motif de pneu définissant un motif souhaité (156) devant être généré dans la portion de traitement (140) par traitement de la portion de traitement (140) par le faisceau laser ;
la génération d'une définition de motif de transfert sur la base de la définition de motif de pneu dans lequel un motif de transfert (164) défini par la définition de motif de transfert correspond à une projection du motif souhaité (156) dans la portion de traitement (140) sur un plan virtuel (166) qui est perpendiculaire au trajet du faisceau laser (130) ;
dans lequel le traitement de la portion de traitement (140) par le faisceau laser est effectué selon la définition de motif de transfert ;
dans lequel le motif souhaité (156) est un code matriciel rectangulaire définissant un premier axe matriciel (161) et un second axe matriciel (162), dans lequel un module de code (158, 160) du code matriciel a des dimensions égales le long du premier axe matriciel (161) et du second axe matriciel (162) ;
dans lequel le positionnement d'une partie (146) de la surface (104) et du trajet du faisceau laser (130) comprend :
la détermination d'une position de la partie (146) de la surface (104) du pneu (106) ;
en fonction de la position déterminée de la partie (146) de la surface (104), le positionnement du trajet du faisceau laser (130) et de la partie (146) de la surface (104) l'un par rapport à l'autre ; dans lequel le positionnement du trajet du faisceau laser (130) et de la partie (146) de la surface (104) l'un par rapport à l'autre inclut en particulier au moins l'un de :
(i) l'ajustement d'une position spatiale du dispositif de traitement laser (128) et de la partie (146) de la surface (104) l'un par rapport à l'autre ;
(ii) l'ajustement d'une orientation du trajet du faisceau laser (130) et de la partie (146) de la surface (104) l'un par rapport à l'autre ;
(iii) l'ajustement d'une position d'un foyer du trajet du faisceau laser (130) dans une direction le long du trajet du faisceau laser (130) ; et dans lequel la détermination d'une position de la partie (146) de la surface (104) du pneu (106) comprend :
la détermination d'une représentation de forme (200, 300, 400) de la partie (146) de la surface (104), la représentation de forme indiquant une forme de la partie (146) de la surface (104) ;
l'identification d'un élément géométrique réel (202, 302, 402) dans la représentation de forme (200, 300, 400), l'élément géométrique réel (202, 302, 402) correspondant à un élément géométrique de référence (204, 304, 404) si le pneu (106) est non déformé et/ou positionné dans une position de référence (221), l'élément géométrique de référence (204, 304, 404) étant symétrique par rapport à un axe de référence (220), l'axe de référence (220) correspondant à un axe de pneu (120) si le pneu (106) est non déformé et/ou positionné dans la position de référence (221), et l'axe de pneu (120) étant un axe de rotation du pneu (106) ;
la détermination de la position de la partie (146) de la surface (104) sur la base d'un écart de l'élément géométrique réel (202, 302, 402) et de l'élément géométrique de référence (204, 304, 404) l'un par rapport à l'autre.

2. Procédé selon la revendication 1, dans lequel
la partie (146) de la surface (104) est définie par une partie latérale du pneu (106) et/ou
la partie (146) de la surface (104) inclut au moins une partie d'un talon (124) du pneu (106) et au moins une partie du talon définit l'élément géométrique réel.

3. Procédé selon l'une quelconque des revendications 1 ou 2, dans lequel la détermination de la position sur la base de l'écart inclut
le filtrage de l'écart, en particulier en utilisant une transformée de Fourier, afin d'obtenir un écart filtré ; et
la détermination de la position de la partie de la surface sur la base de l'écart filtré.

4. Procédé selon l'une quelconque des revendications 1 à 3, dans lequel :
la représentation de forme (200, 300, 400) est un profil vertical de la partie (146) de la surface (104) ou est une image de la partie (146) de la surface (104), dans lequel le profil vertical est en particulier déterminé par rapport à un plan qui est perpendiculaire à l'axe de pneu (120).

5. Procédé selon l'une quelconque des revendications 1 à 4, comprenant en outre :
l'identification d'un motif prédéterminé (138) sur le pneu (106) ;
dans lequel la détermination de la position de la partie (146) de la surface (104) inclut la détermination d'une position angulaire de la partie (146) de la surface (104) par rapport à l'axe de pneu (120) sur la base de la position angulaire du motif prédéterminé (138).

6. Procédé selon l'une quelconque des revendications 1 à 5, comprenant en outre :
la détermination d'une représentation de forme (200, 300, 400) d'une portion de traitement (140) de la surface (104) du pneu (106), dans lequel la portion de traitement (140) doit être traitée par un faisceau laser généré par le dispositif de traitement laser (128) et se propageant le long du trajet du faisceau laser (130) ; et
ledit positionnement du trajet du faisceau laser (130) et de la partie (146) de la surface du pneu (106) l'un par rapport à l'autre est effectué également en fonction de la représentation de forme (200, 300, 400) de la portion de traitement (140).

7. Procédé selon l'une quelconque des revendications 1 à 6, dans lequel le dispositif de traitement laser (128) peut tourner autour d'un axe de dispositif laser (118), le procédé comprenant en outre :
le positionnement grossier du dispositif de traitement laser (128) et du pneu (106) l'un par rapport à l'autre par alignement de l'axe de dispositif laser (118) avec l'axe de pneu (120).

8. Dispositif de traitement de pneu comprenant :
un dispositif de détection (102) pour la détermination d'une représentation de forme (200, 300, 400) d'une partie (146) d'une surface (104) d'un pneu (106) ;
un dispositif de traitement de données (112) configuré pour l'identification d'un élément géométrique réel (202, 302, 402) dans la représentation de forme (200, 300, 400), l'élément géométrique réel correspondant à un élément géométrique de référence (204, 304, 404) si le pneu (106) est non déformé et/ou positionné dans une position de référence (221) ; l'élément géométrique de référence (204, 304, 404) étant symétrique par rapport à un axe de référence (220), l'axe de référence (220) correspondant à un axe de pneu (120) si le pneu (106) est non déformé et/ou positionné dans la position de référence (221), et l'axe de pneu (120) étant un axe de rotation du pneu (106) ;
le dispositif de traitement de données (112) étant configuré pour la détermination de la position de la partie (146) de la surface (104) sur la base d'un écart de l'élément géométrique réel (202, 302, 402) et de l'élément géométrique de référence (204, 304, 404) l'un par rapport à l'autre ;
le dispositif de traitement de pneu comprenant en outre :
un dispositif de traitement laser (128) ;
un actionneur (148, 150, 154) configuré pour le positionnement l'un par rapport à l'autre de la partie (146) de la surface (104) et d'un trajet du faisceau laser (130) du dispositif de traitement laser (128) en fonction de la position déterminée de la partie (146) de la surface (104) ;
le dispositif de traitement de données (112) étant configuré pour faire fonctionner le dispositif de traitement laser (128) après le positionnement de la partie (146) de la surface (104) et du trajet du faisceau laser (130) l'un par rapport à l'autre, dans lequel ledit fonctionnement du dispositif de traitement laser (128) inclut le fonctionnement du dispositif de traitement laser (128) pour générer le faisceau laser, le faisceau laser se propageant le long du trajet du faisceau laser (130) pour le traitement d'une portion de traitement (140) de la surface (104) du pneu (106) pour la génération d'un motif (142), appelé motif de pneu, dans la portion de traitement (140) ;
dans lequel, pendant la génération du motif de pneu (142), le trajet du faisceau laser (130) forme un angle différent de 90 degrés avec une surface alentour (172) entourant le motif de pneu (142) ; et
dans lequel comparativement à un motif souhaité (156) une distorsion du motif de pneu (142) causée par la différence de l'angle de 90 degrés est au moins partiellement empêchée par traitement de la portion de traitement (140) par le faisceau laser selon une définition de motif de transfert, dans lequel un motif de transfert (164) défini par la définition de motif de transfert correspond à une projection du motif souhaité (156) dans la portion de traitement (140) sur un plan virtuel (166) qui est perpendiculaire au trajet du faisceau laser (130).

9. Pneu (106) comprenant :
un motif (142), appelé motif de pneu, généré dans une portion de traitement (140) du pneu (106) par un faisceau laser se propageant le long d'un trajet du faisceau laser (130) ;
une surface alentour (172) entourant le motif de pneu (142), dans lequel le motif de pneu (142) comprend une pluralité d'évidements inclinés (174), dans lequel la pluralité d'évidements inclinés (174) comporte deux portions de paroi (176) qui se font face et définissent une ligne médiane (133) entre elles, dans lequel la ligne médiane (133) est à égale distance des portions de paroi (176) dans un plan perpendiculaire à la ligne médiane (133), et dans lequel la ligne médiane (133) forme avec la surface alentour (172) un angle (178) qui est différent de 90 degrés ;
dans lequel comparativement à un motif souhaité (156) une distorsion du motif de pneu (142) causée par la différence de l'angle de 90 degrés a été au moins partiellement empêchée par traitement de la portion de traitement (140) par le faisceau laser selon une définition de motif de transfert, dans lequel un motif de transfert (164) défini par la définition de motif de transfert correspond à une projection du motif souhaité (156) dans la portion de traitement (140) sur un plan virtuel (166) qui est perpendiculaire au trajet du faisceau laser (130) dont un centre correspond à la ligne médiane (133) ; et
dans lequel le motif souhaité (156) est un code matriciel rectangulaire définissant un premier axe matriciel (161) et un second axe matriciel (162), dans lequel chaque module de code (158, 160) du code matriciel a des dimensions égales le long du premier axe matriciel (161) et du second axe matriciel (162).

10. Produit de programme informatique comprenant un élément de programme, l'élément de programme étant configuré pour réaliser le procédé selon l'une quelconque des revendications 1 à 7 lorsque l'élément de programme est exécuté sur un dispositif de traitement de données (112).
